# EUROPEAN PATENT SPECIFICATION

(11) **EP 2 073 422 B1**
(45) Date of publication and mention of the grant of the patent: **24.06.2015**
(21) Application number: 07291612.5
(22) Date of filing: 21.12.2007
(51) Int. Cl.: H04L 1/00

(54) **Error control mechanism**
Fehlerkontrollmechanismus
Mécanisme de contrôle des erreurs

(43) Date of publication of application: 24.06.2009
(73) Proprietor: ALCATEL LUCENT, 92100 Boulogne-Billancourt (FR)
(72) Inventor: Vandaele, Piet Michel Albert, 9040 Sint-Amandsberg (BE); De Vleeschauwer, Danny, 9940 Evergem (BE); T'Joens, Yves, 8200 Sint Michiels-Brugge (BE); Sharpe, Randall, Chapel Hill, North Carolina 27516 (US)
(74) Representative: Narmon, Gisèle Marie Thérèse

(56) References cited:
- US-A- 5 428 629
- US-A- 6 108 331
- US-A1- 2004 156 325
- LIM T L ET AL: "Selective Cooperation Based on Link Distance Estimations in Wireless Ad-Hoc Networks" WORLD OF WIRELESS, MOBILE AND MULTIMEDIA NETWORKS, 2006. WOWMOM 2006. INTERNATIONAL SYMPOSIUM ON A BUFFALO-NIAGARA FALLS, NY, USA 26-29 JUNE 2006, PISCATAWAY, NJ, USA,IEEE, 26 June 2006 (2006-06-26), pages 391-400, XP010925887 ISBN: 978-0-7695-2593-8

## Description

The present invention relates to a method to control errors on transmission of data and related access node.

An error control mechanism is already known in the art. Indeed, triple play services over Digital Subscriber Line DSL networks are being more and more deployed. In order to provide end-users with a good video service, the number of visual errors that can be seen on the TV should be limited to a minimum. The tolerable upper bound is typically of the order of magnitude of one error per hour. The bit error rates of e.g. DSL lines 10⁻⁷ do not allow achieving this targeted video quality without additional measures. One of the known solutions is to apply forward error correction FEC to the transmitted video content, e.g. according to Standards such as e.g. RFC2733, being published on the Public Internet with link-reference: *http:*//*www.faqs.org*/*rfcs*/*rfc2733.html.*

In a typical implementation this coding is added at the video head-end and removed at the subscriber set-up box or end-user terminal. The application of the Forward Error Control, called hereafter shortly FEC, allows recovering potentially lost video packets at the terminal side.

In an IPTV context the transmission path typically consists of one the one hand a common transmission path from head-end to the access node and on the other hand an individual path per user from the access node to the user's terminal (composed of an access link, often referred to as the "last mile", and a home network).

It has to be explained that the FEC is applied in the head-end irrespective, in terms of error characteristics, of the "quality" of the last mile or the home network. As such, the FEC that is applied by the head-end should cover the worst-case conditions. Assume for example an access network that contains both fiber access links as well as DSL access links, then the above method will send the FEC also over the fiber link, where protection might not be needed. Similarly, fixed wireless broadband access technologies such as WIMAX might require a different level of error protection compared to DSL last mile technology. Even for DSL lines, measurements from the field show that the quality can widely differ between different lines.

Forward error correction FEC is a system of error control for data transmission, whereby the sender adds redundant data to its messages or data. This allows the receiver of the data to detect and correct errors within some bound without the need to ask the sender for additional data. The advantage of forward error correction over a retransmission scheme is that there is no need for a return channel, at the cost of higher bandwidth requirements on average, and is therefore applied in situations where retransmissions are relatively costly or impossible. It depends on the circumstances (mainly the Round Trip Time (RTT) and the availability of free bandwidth to transmit the overhead bit rate) which of the two schemes, FEC or a retransmission scheme, has the best performance.

However, as described in the above *mention Standard, in the last paragraph of Chapter 12 - Security Considerations of RFC2733,* is that FEC indeed also has its impact on the network congestion. Adding FEC in the face of increasing network losses is a bad idea, as it can lead to increased congestions and eventual congestion collapse if done on a widespread basis. As a result, the amount of FEC must not be substantially increased in use when network losses increase. Hereby it becomes clear that applying FEC also knows its disadvantages.

An Optical transmission network with asynchronous mapping and demapping and digital wrapper frame for the same is described in US2004156325. Therein, an optical transmission network which is inherently asynchronous due to the utilization of a variable overhead ratio (V-OHR) is disclosed. The network architecture makes extensive use of OEO regeneration, i.e., deals with any electronic reconditioning to correct for transmission impairments, such as, for example, FEC encoding, decoding and re-encoding, signal reshaping retiming as well as signal regeneration. The optical transmission network includes a plesiochronous clocking system with intermediate nodes designed to operate asynchronously with a single local frequency clock without complicated network synchronization schemes employing high cost clocking devices such as phase locked loop (PLL) control with crystal oscillators and other expensive system components. The asynchronous network operation provides for asynchronous remapping or remapping of any client signal utilizing any type of transmission protocol where the line side rate or frequency is always the same frequency for the payload signal and the local frequency at an intermediate node is set to a local reference clock in accordance with the payload type and its overhead ratio, i.e., the overhead ratio is varied to meet the desired difference between the line rate or frequency and the desired client signal payload rate or frequency for the particular client signal payload type.

An object of the present invention is to provide a method to control errors on transmission of data being transmitted from a head-end to an end-user terminal in an access network and related access node, such as the above know methods to control error on transmission of data but whereby bandwidth savings and optimal protection for different access and home-network technologies can be reached.

According to the invention, this object is achieved by the insight that in an access network different kind of levels of protection mechanisms over the different stages between the network elements knows its advantages. Indeed, by applying a first protection mechanism e.g. a forward error control mechanism by the head-end, effective protection is provided between the head-end and the access node. Furthermore, by involving the access node in the first protection mechanism e.g. by removing by the access node the FEC completely before the last mile and home network, a more adapted protection mechanism i.e. a second protection mechanism can be applied between the access node and the end-user. In this way, the access node determines the most suitable protection mechanism for the last mile between the access node and the end-user terminal.

In this way a method of error control in transmission of data that is transmitted from a head-end to an end-user terminal is defined in an access network, comprising the steps of applying by the head-end a first protection mechanism and thereby transmitting by the head-end to access node a first data stream that comprises the original data and first reconstruction data. Such first reconstruction data is generated based upon the original data and is associated to this original data. The method further comprises by an access node, that is coupled between the head-end and the terminal, terminating the first protection mechanism and thereby:
- extracting the first reconstruction data from the first data stream; and
- reconstructing reconstructed data by the access node according to the first protection mechanism and being based upon the, possibly error, received data and the first reconstruction data; and
- applying by the node a second protection mechanism and thereby transmitting by the access node to the terminal a second data stream that comprises the reconstructed data and second reconstruction data. The second reconstruction data is generated based upon the reconstructed data and is associated thereto.

It has to be remarked that the strength of the second protection mechanism depends on the loss characteristics of the last mile link and the home network of the end user.

Another characteristic feature of the present invention is that the first protection mechanism is accomplished by a forward error control mechanism whereby the first reconstruction data is in fact forward error control data that is generated by the head-end, based upon the data, and forwarded together with the data towards the terminal. However, since the access node already terminates the forward error control mechanism, the forward error control data is used by the access node to reconstruct the data.

A further embodiment is that the second protection mechanism is accomplished by a retransmission mechanism whereby the second reconstruction data is in fact retransmission data.

Finally the present described method to control error on transmission of data, knows especially its advantages when deploying triple play services over digital subscriber line DSL networks. Hereby the data in the method is accomplished by means of triple play content data such as video content data.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

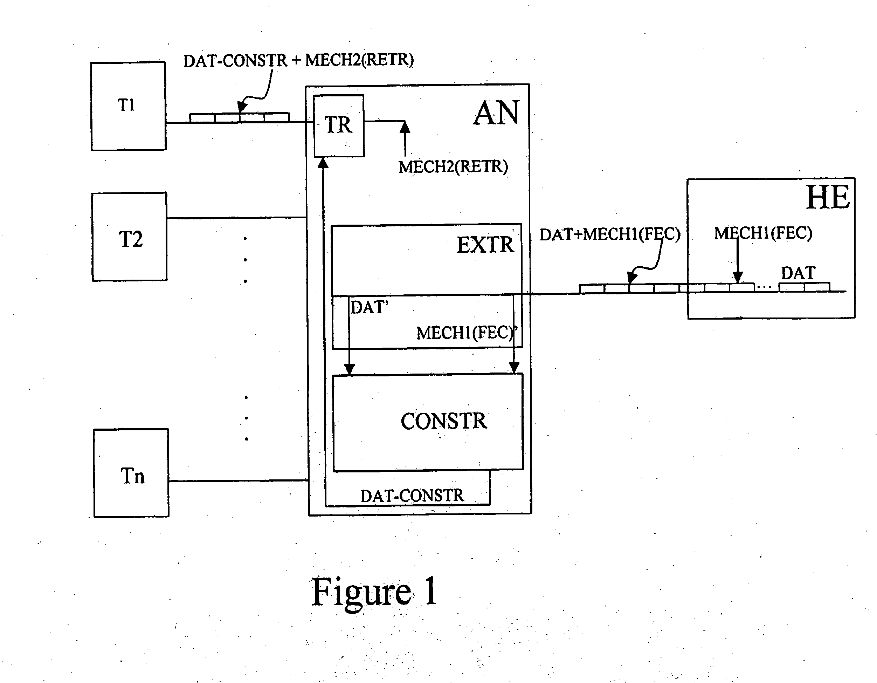

The above and other objects and features of the invention will become more apparent and the invention itself will be best understood by referring to the following description of an embodiment taken in conjunction with the accompanying drawings wherein Figure 1 represents an Access network.

The working of the device according to the present invention in accordance with its telecommunication environment that is shown in this Figure 1 will be explained by means of a functional description of the different blocks shown therein. Based on this description, the practical implementation of the blocks will be obvious to a person skilled in the art and will therefore not be described in details. In addition, the principle working of the method to control error on transmission of data being transmitted from a head-end to and end-user terminal in an access network will be described in further detail.

Referring to the Figure 1, an Access network is described. The Access Network comprises a head-end HE being coupled to an access node AN which is on its turn coupled to a plurality of end-user terminals T1, T2, ..., Tn. Data DAT has to be transmitted by the head-end HE to the terminal T1 via the access node AN. Presume that the Access Network is a DSL access network and that the data DAT is the content to provide a triple play service such as video content to an end-user terminal e.g. T1. In order to provide the end-users in the Access Network a good quality service, a first protection mechanism MECH1 is applied. The head-end HE comprises means to apply this first protection mechanism MECH1 (not shown in the Figure) while transmitting the data DAT to the terminal T1. For the actual described embodiment it is preferred to apply a Forward Error Correction Mechanism. However, it has to be clear that this is only an example and that another protection mechanism might as well be applied by the head-end HE. In the event when implementing such a forward error correction mechanism, forward error correction data MECH1(FEC) is generated by the head-end HE according to the first protection mechanism MECH1 and based upon the to be transmitted information i.e. data DAT. The first reconstruction data i.e. forward error correction data MECH1(FEC) is associated to the data DAT. In this way the head-end HE transmits a first data stream DAT+MECH1(FEC) (See Figure 1) that comprises the data DAT and the forward error correction data MECH1 (FEC). The first data stream DAT+MECH1(FEC) is transmitted by the head-end HE towards the terminal T1.

However, the first data stream DAT+MECH1(FEC) is firstly received by the access node AN. It has to be explained that according to the present application the access node AN terminates already here the first protection mechanism MECH1. Effective protection has indeed been provided between the head-end HE and the access node. However, more customized protection is required between the access node AN and the terminal T1. The access node is the appropriate point in the network to introduce this customized protection. The access node can measure the line characteristics. In addition, it is also the last fan-out point for multicast content. The access node decides, based on its knowledge of the last mile and taking into account the home network characteristics, the most appropriate second protection mechanism MECH2. The decision of the access node AN, which second protection mechanism MECH2 to select can also be based on feedback from the subscriber terminal e.g. T1.

The working of the access node AN will be further described in the following paragraph.

The access node AN comprises an extractor EXTR, a constructor CONSTR and a transmitter TR.

The Extractor EXTR is coupled to an input of the access node AN and receives e.g. the first data stream DAT+MECH1(FEC)). The extractor EXTR is coupled to the constructor CONSTR. The constructor CONSTR is on its turn coupled to the transmitter TR which is coupled to an output of the access node AN. This output is coupled to the terminal T1

The extractor EXTR is included in the access node AN to terminate i.e. to stop the first protection mechanism MECH1 in the Access node AN. Hereby, the first reconstruction data MECH1(FEC) i.e. the forward error control data MECH1(FEC) is extracted from the first data stream DAT+MECH1(FEC) and is provided to the constructor CONSTR.

The constructor CONSTR is included in the access node AN to re-construct the data DAT based upon received degraded data DAT' and the received degraded forwarded error control data MECH1(FEC)'. Hereby reconstructed data DAT-CONSTR is generated.

It has to be explained that the received data DAT' (and forwarded error control data MECH 1(FEC)') by the access node AN is in fact the data DAT (and forwarded error control data MECH1(FEC)) which has been degraded during transmission e.g. wrong bits received at the access node AN, bits even not being received or missing packets from the data DAT. However, this fact is not the aim of the present application. The aim of the present application is that a first protection mechanism is applied at the head-end HE to protect data intended for the terminal T1 and that this first protection mechanism MECH1 is already stopped at the level of the access node AN to reconstruct i.e. to repair the received data already at that point, in stead of further forwarding the received first data stream DAT'+MECH1 (FEC)' towards the terminal T1.

The reconstructed data DAT-CONSTR that was generated by the constructor CONSTR is provided to the transmitter TR of the access node AN in order to be transmitted to the terminal T1.

It has to be remarked here that the received first reconstruction data MECH1 (FEC)' will not be further forwarded to the terminal T1.

The access node AN applies at this stage a selected second protection mechanism MECH2. It is preferred, but not limited, for this actual described embodiment to select and describe a retransmission mechanism. According to such a retransmission mechanism, a receiver of information requests to the transmitter of the information to retransmit part of the information that was not properly received.

The transmitter TR is included in the access node AN to transmit to the terminal T1 a second data stream DAT-CONSTR+MECH2(RETR). This second data stream DAT-CONSTR+MECH2(RETR) includes the information that has to be transmitted i.e. the reconstructed data DAT-CONSTR and second reconstruction data MECH2(RETR). The second reconstruction data MECH2(RETR) is generated according to the second protection mechanism MECH2 and is based upon the reconstructed data DAT-CONSTR. This means that in the event when the terminal T1 is receiving degraded reconstructed data, the terminal requests according to the second protection mechanism to the access node AN second reconstruction data MECH2(RETR) in order to be able to repair the received degraded reconstruction data. This requested second reconstruction data MECH2(RETR) is transmitted by the access node AN within the second data stream DAT-CONTR+MECH2(RETR) together with reconstructed data DAT-CONTR to the terminal T1.

In this way the access node AN is involved in the protection process for the second stage of the forwarding process. The selected protection mechanism MECH2 is adapted to the last mile and home network characteristics. The type of protection mechanism MECH2 is selected in function of the requirements of the last mile technology in use.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method of error control in transmission of data (DAT), said data being transmitted from a head-end (HE) to an end-user terminal (Ti) in an access network, said access network also comprising and access node (AN) being coupled between said head-end (HE) and said terminal (Ti), the method comprising the steps of:
said head-end (HE) applying a first protection mechanism (MECH1) to generate first reconstruction data (MECH1 (FEC)) based upon said data (DAT) and being associated to said data (DAT),
- said head-end (HE) transmitting to said access node (AN) a first data stream (DAT+MECH1(FEC)) comprising said data (DAT) and said first reconstruction data (MECH1 (FEC)),
- said access node (AN) receiving said first data stream (DAT+MECH1 (FEC));
- said access node (AN) extracting said first reconstruction data (MECH1(FEC)') and said data (DAT') from said first data stream (DAT+MECH1 (FEC)); and
- said access node (AN) reconstructing reconstructed data (DAT-CONSTR) according to said first protection mechanism (MECH1) based upon said data (DAT') and said first received reconstruction data (MECH1 (FEC)') and
- said access node (AN) selecting for a second stage between said access node (AN) and said terminal (Ti) a second protection mechanism (MECH2) based upon second stage technology requirements; and
- said access node (AN) applying said second protection mechanism (MECH2) to generate second reconstruction data (MECH2(RETR)) based upon said reconstructed data (DAT-CONSTR) and being associated to said reconstructed data (DAT-CONSTR),
- said access node (AN) transmitting to said terminal (Ti) a second data stream (DAT-CONSTR+MECH2(RETR)) comprising said reconstructed data (DAT-CONSTR) and said second reconstruction data (MECH2(RETR)).

2. The method of error control in transmission of data (DAT) according to claim 1, wherein said first protection mechanism (MECH1) is accomplished by a forward error control mechanism whereby said first reconstruction data (MECH1(FEC)) is forward error control data (FEC).

3. The method of error control in transmission of data (DAT) according to anyone of claim 1 and claim2, wherein said second protection mechanism (MECH2) is accomplished by a retransmission mechanism whereby said second reconstruction data (MECH2(RETR)) is retransmission data (RETR).

4. The method of error control in transmission of data (DAT) according to any previous claim, wherein said data (DAT) is triple play content data such as video content data.

5. The method of error control in transmission of data (DAT) according to any previous claim, wherein said Access node (AN) is an access node in a digital subscriber line access network.

6. An access node (AN) in an access network being coupled between a head-end (HE) and end-user terminal (Ti) to forward data (DAT), being received from said head-end (HE) towards said terminal (Ti), said access node (AN) comprising:
- an extractor (EXTR) to extract first reconstruction data (MECH1(FEC)') and said data (DAT') from a first data stream (DAT+MECH1(FEC)), said first data stream (DAT+MECH1(FEC)) being transmitted by said head-end (HE) to said terminal (T1) and comprises said data (DAT) and said first reconstruction data (MECH1(FEC)), said first reconstruction data (MECH1(FEC)) being generated based upon said data (DAT) while applying a first protection mechanism (MECH1) and being associated to said data (DAT); and
- a constructor (CONSTR) to re-construct, according to said first protection mechanism (MECH1), reconstructed data (DAT-CONSTR) based upon said data (DAT') and said received first reconstruction data (MECH 1(FEC)'); and
- a transmitter (TR) to transmit to said terminal (Ti) while applying a second protection mechanism (MECH2), a second data stream (DAT+MECH2(RETR)) comprising said reconstructed data (DAT-CONSTR) and second reconstruction data (MECH2(RETR)) being associated to said reconstructed data (DAT-CONSTR), said second protection mechanism (MECH2) being selected by said access node (AN) for a second stage between said access node (AN) and said terminal (T1) based upon second stage technology requirements.

7. The access node (AN) according to claim 6, wherein said first protection mechanism (MECH1) is accomplished by a forward error control mechanism whereby said first reconstruction data (MECH1(FEC)) is forward error control data (FEC).

8. The access node (AN) according to anyone of claim 6 and claim 7, wherein said second protection mechanism (MECH2) is accomplished by a retransmission mechanism whereby said second reconstruction data (MECH2(RETR)) is retransmission data (RETR).

## Patentansprüche

1. Verfahren zur Fehlerkontrolle in der Übertragung von Daten (DAT), wobei die besagten Daten von einer Head-End-Station (HE) an ein Benutzerendgerät (Ti) in einem Zugangsnetzwerk übertragen werden, wobei das besagte Zugangsnetzwerk einen Zugangsknoten (AN) umfasst, welcher zwischen der besagten Head-End-Station (HE) und dem besagten Endgerät (Ti) gekoppelt ist, wobei das Verfahren die folgenden Schritte umfasst:
Anwenden, durch die besagte Head-End-Station (HE), eines ersten Schutzmechanismus (MECH1), um auf der Basis der besagten Daten (DAT) und mit den besagten Daten (DAT) assoziierte erste Rekonstruktionsdaten (MECH1(FEC)) zu erzeugen,
Übertragen, durch die besagte Head-End-Station (HE), eines ersten Datenstroms (DAT+MECH1(FEC)), welcher die besagten Daten (DAT) und die besagten ersten Rekonstruktionsdaten (MECH1(FEC)) umfasst, an den besagten Zugangsknoten (AN);
Empfangen des besagten ersten Datenstroms (DAT+MECH1(FEC)) an dem besagten Zugangsknoten (AN);
Extrahieren, durch den besagten Zugangsknoten (AN), der besagten ersten Rekonstruktionsdaten (MECH1(FEC)') und der besagten Daten (DAT') aus dem besagten ersten Datenstrom (DAT+MECH1(FEC)); und
Rekonstruieren, durch den besagten Zugangsknoten (AN), der rekonstruierten Daten (DAT-CONSTR) gemäß dem besagten ersten Schutzmechanismus (MECH1) auf der Basis der besagten Daten (DAT') und der besagten empfangenen ersten Rekonstruktionsdaten (MECH1(FEC)`), und
Auswählen, durch den besagten Zugangsknoten (AN), eines zweiten Schutzmechanismus (MECH2) für eine zweite Stufe zwischen dem besagten Zugangsknoten (AN) und dem besagten Endgerät (Ti) auf der Basis der technologischen Anforderungen der zweiten Stufe; und
Anwenden, durch den besagten Zugangsknoten (AN), des besagten zweiten Schutzmechanismus (MECH2), um auf der Basis der besagten rekonstruierten Daten (DAT-CONSTR) und mit den besagten rekonstruierten Daten (DAT-CONSTR) assoziierte zweite Rekonstruktionsdaten (MECH2(RETR)) zu erzeugen;
Übertragen, durch den besagten Zugangsknoten (AN), eines zweiten Datenstroms (DAT-CONSTR+MECH2(RETR)), welcher die besagten rekonstruierten Daten (DAT-CONSTR) und die besagten zweiten Rekonstruktionsdaten (MECH2(RETR)) umfasst, an das besagte Endgerät (Ti).

2. Verfahren zur Fehlerkontrolle in der Übertragung von Daten (DAT) nach Anspruch 1, wobei der besagte erste Schutzmechanismus (MECH1) durch einen Vorwärtsfehlerkontrollmechanismus erreicht wird, wobei die besagten ersten Rekonstruktionsdaten (MECH1(FEC) Vorwärtsfehlerkontrolldaten (FEC) sind.

3. Verfahren zur Fehlerkontrolle in der Übertragung von Daten (DAT) nach einem beliebigen der Ansprüche 1 und 2, wobei der besagte zweite Schutzmechanismus (MECH2) durch einen Sendewiederholungsmechanismus erreicht wird, wobei die besagten zweiten Rekonstruktionsdaten (MECH2(RETR)) Wiederholungsdaten (RETR) sind.

4. Verfahren zur Fehlerkontrolle in der Übertragung von Daten (DAT) nach einem beliebigen der vorstehenden Ansprüche, wobei die besagten Daten (DAT) Triple-Play-Inhaltsdaten wie beispielsweise Videoinhaltsdaten sind.

5. Verfahren zur Fehlerkontrolle in der Übertragung von Daten (DAT) nach einem beliebigen der vorstehenden Ansprüche, wobei der besagte Zugangsknoten (AN) ein Zugangsknoten in einem digitalen Teilnehmeranschluss-Zugangsnetzwerk ist.

6. Zugangsknoten (AN) in Zugangsnetzwerk, welcher zwischen einer Head-End-Station (HE) und einem Benutzerendgerät (Ti) gekoppelt ist, um von der besagten Head-End-Station (HE) empfangene Daten (DAT) an das besagte Endgerät (Ti) weiterzuleiten, wobei der besagte Zugangsknoten (AN) umfasst:
- Einen Extraktor (EXTR) zum Extrahieren von ersten Rekonstruktionsdaten (MECH1(FEC)`) und besagten Daten (DAT') aus einem ersten Datenstrom (DAT+MECH1(FEC)), wobei der besagte erste Datenstrom (DAT+MECH1(FEC)) durch die besagte Head-End-Station (HE) an das besagte Endgerät (Ti) übertragen wird und die besagten Daten (DAT) und die besagten ersten Rekonstruktionsdaten (MECH1(FEC)) umfasst, wobei die besagten ersten Rekonstruktionsdaten (MECH1(FEC)) auf der Basis der besagten Daten (DAT) während der Anwendung eines ersten Schutzmechanismus (MECH1) erzeugt werden und mit den besagten Daten (DAT) assoziiert sind; und
- einen Konstruktor (CONSTR) zum Rekonstruieren, gemäß dem besagten ersten Schutzmechanismus (MECH1), von rekonstruierten Daten (DAT-CONSTR) auf der Basis der besagten Daten (DAT') und der besagten empfangenen ersten Rekonstruktionsdaten (MECH1(FEC)`); und
- Einen Sender (TR) zum Übertragen, während der Anwendung eines zweiten Schutzmechanismus (MECH2), eines zweiten Datenstroms (DAT+MECH2(RETR)), welcher die besagten rekonstruierten Daten (DAT-CONSTR) und zweite Rekonstruktionsdaten (MECH2(RETR)), die mit den besagten rekonstruierten Daten (DAT-CONSTR) assoziiert sind, umfasst, an das besagte Endgerät (Ti), wobei der besagte zweite Schutzmechanismus (MECH2) durch den besagten Zugangsknoten (AN) für eine zweite Stufe zwischen dem besagten Zugangsknoten (AN) und dem besagten Endgerät (Ti) auf der Basis der technologischen Anforderungen der zweiten Stufe ausgewählt wird.

7. Zugangsknoten (AN) nach Anspruch 6, wobei der besagte erste Schutzmechanismus (MECH1) durch einen Vorwärtsfehlerkontrollmechanismus erreicht wird, wobei die besagten ersten Rekonstruktionsdaten (MECH1(FEC)) Vorwärtsfehlerkontrolldaten (FEC) sind.

8. Zugangsknoten (AN) nach einem beliebigen der Ansprüche 6 und 7, wobei der besagte zweite Schutzmechanismus (MECH2) durch einen Sendewiederholungsmechanismus erreicht wird, wobei die besagten zweiten Rekonstruktionsdaten (MECH2(RETR)) Wiederholungsdaten (RETR) sind.

## Revendications

1. Procédé de contrôle d'erreurs dans la transmission de données (DAT), lesdites données étant transmises depuis une tête de réseau (HE) vers un terminal d'utilisateur final (Ti) dans un réseau d'accès, ledit réseau d'accès comprenant aussi un noeud d'accès (AN) couplé entre ladite tête de réseau (HE) et ledit terminal (Ti), le procédé comprenant les étapes suivantes :
ladite tête de réseau (HE) applique un premier mécanisme de protection (MECH1) pour générer des premières données de reconstruction (MECH1(FEC)) basées sur lesdites données (DAT) et associées auxdites données (DAT),
- ladite tête de réseau (HE) transmet audit noeud d'accès (AN) un premier flux de données (DAT+MECH1(FEC)) comprenant lesdites données (DAT) et lesdites premières données de reconstruction (MECH1(FEC)),
- ledit noeud d'accès (AN) reçoit ledit premier flux de données (DAT+MECH 1(FEC)) ;
- ledit noeud d'accès (AN) extrait lesdites premières données de reconstruction (MECH1(FEC)') et lesdites données (DAT') dudit premier flux de données (DAT+MECH1(FEC)) ; et
- ledit noeud d'accès (AN) reconstruit des données reconstruites (DAT-CONSTR) conformément audit premier mécanisme de protection (MECH1) sur la base desdites données (DAT') et desdites premières données de reconstruction reçues (MECH1 (FEC)') et
- ledit noeud d'accès (AN) sélectionne pour une deuxième étape entre ledit noeud d'accès (AN) et ledit terminal (Ti) un deuxième mécanisme de protection (MECH2) sur la base des exigences de technologie de deuxième étape ; et
- ledit noeud d'accès (AN) applique ledit deuxième mécanisme de protection (MECH2) pour générer des deuxièmes données de reconstruction (MECH2(RETR)) basées sur lesdites données reconstruites (DAT-CONSTR) et associées auxdites données reconstruites (DAT-CONSTR),
- ledit noeud d'accès (AN) transmet audit terminal (Ti) un deuxième flux de données (DATCONSTR+MECH2(RETR)) comprenant lesdites données reconstruites (DAT-CONSTR) et lesdites deuxièmes données de reconstruction (MECH2(RETR)).

2. Procédé de contrôle d'erreurs dans la transmission de données (DAT) selon la revendication 1, dans lequel ledit premier mécanisme de protection (MECH1) est réalisé par un mécanisme de contrôle d'erreurs sans voie de retour, lesdites premières données de reconstruction (MECH1(FEC)) étant des données de contrôle d'erreurs sans voie de retour (FEC).

3. Procédé de contrôle d'erreurs dans la transmission de données (DAT) selon l'une quelconque des revendications 1 et 2, dans lequel ledit deuxième mécanisme de protection (MECH2) est réalisé par un mécanisme de retransmission, lesdites deuxièmes données de reconstruction (MECH2(RETR)) étant des données de retransmission (RETR).

4. Procédé de contrôle d'erreurs dans la transmission de données (DAT) selon l'une quelconque des revendications précédentes, dans lequel lesdites données (DAT) sont des données de contenu de triple service telles que des données de contenu vidéo.

5. Procédé de contrôle d'erreurs dans la transmission de données (DAT) selon l'une quelconque des revendications précédentes, dans lequel ledit noeud d'accès (AN) est un noeud d'accès dans un réseau d'accès de ligne d'abonné numérique.

6. Noeud d'accès (AN) dans un réseau d'accès couplé entre une tête de réseau (HE) et un terminal d'utilisateur final (Ti) pour transférer des données (DAT), depuis ladite tête de réseau (HE) vers ledit terminal (Ti), ledit noeud d'accès (AN) comprenant :
- un extracteur (EXTR) pour extraire des premières données de reconstruction (MECH1 (FEC)') et lesdites données (DAT') d'un premier flux de données (DAT+MECH1(FEC)), ledit premier flux de données (DAT+MECH1(FEC)) étant transmis depuis ladite tête de réseau (HE) vers ledit terminal (T1) et comprend lesdites données (DAT) et lesdites premières données de reconstruction (MECH1(FEC)), lesdites premières données de reconstruction (MECH1(FEC)) étant générées sur la base desdites données (DAT) tout en appliquant un premier mécanisme de protection (MECH1) et étant associées auxdites données (DAT) ; et
- un constructeur (CONSTR) pour reconstruire, conformément audit premier mécanisme de protection (MECH1), des données reconstruites (DAT-CONSTR) sur la base desdites données (DAT') et desdites premières données de reconstruction reçues (MECH1 (FEC)') ; et
- un émetteur (TR) pour transmettre audit terminal (Ti), tout en appliquant un deuxième mécanisme de protection (MECH2), un deuxième flux de données (DAT+MECH2(RETR)) comprenant lesdites données reconstruites (DAT-CONSTR) et des deuxièmes données de reconstruction (MECH2(RETR)) associées auxdites données reconstruites (DAT-CONSTR), ledit deuxième mécanisme de protection (MECH2) étant sélectionné par ledit noeud d'accès (AN) pour une deuxième étape entre ledit noeud d'accès (AN) et ledit terminal (T1) sur la base des exigences de technologie de deuxième étape.

7. Noeud d'accès (AN) selon la revendication 6, dans lequel ledit premier mécanisme de protection (MECH1) est réalisé par un mécanisme de contrôle d'erreurs sans voie de retour, lesdites premières données de reconstruction (MECH1(FEC)) étant des données de contrôle d'erreurs sans voie de retour (FEC).

8. Noeud d'accès (AN) selon l'une quelconque des revendications 6 et 7, dans lequel ledit deuxième mécanisme de protection (MECH2) est réalisé par un mécanisme de retransmission, lesdites deuxièmes données de reconstruction (MECH2(RETR)) étant des données de retransmission (RETR).
